# EUROPEAN PATENT APPLICATION

(11) **EP 3 646 965 A1**
(43) Date of publication of application: **06.05.2020**
(21) Application number: 18824476.8
(22) Date of filing: 25.06.2018
(51) Int. Cl.: B22C 1/20

(54) **BONDING AGENT FOR USE IN 3D PRINTING PROCESS AND PREPARATION METHOD AND APPLICATION THEREOF**

(30) Priority: 28.06.2017 CN 201710508359
(71) Applicant: Jinan Shengquan Group Share Holding Co., Ltd, Zhangqiu Ji'nan Shandong 250204 (CN)
(72) Inventor: ZHU, Jianxun, Ji'nan Shandong 250204 (CN); BAI, Shilong, Ji'nan Shandong 250204 (CN); ZHOU, Guodong, Ji'nan Shandong 250204 (CN)
(74) Representative: Ezcurra Zufia, Maria Antonia
(86) International application number: PCT/CN2018/092586
(87) International publication number: WO 2019/001382

(57) **Abstract**

A bonding agent for use in a 3D printing process comprises the following components: 15-60 parts by weight of a furan resin, 42-68 parts by weight of furfuryl alcohol, 1-12 parts by weight of an accelerator, and 0.1-5 parts by weight of an additive, wherein the said furan resin is prepared by the reaction of phenolic resin and furfuryl alcohol. Also disclosed are a preparation method and application of a bonding agent for use in a 3D printing process. The above bonding agent for use in a 3D printing process has an extremely low viscosity at room temperature, and its viscosity is lower than 10 mPa.s at 20 °C, thus meeting the resin requirements of the print head in 3D printing equipment, such that the print head is not easily blocked, thereby facilitating the maintenance of the machine. The bonding agent has good performance for wrapping sand particles in the process of sand applying, and the printed sand mold has higher mechanical strength and faster curing speed, thus facilitating sand dropping and cleaning and improving the operational performance.

## Description

### Technical Field

The present application relates to the field of 3D printing materials, and in particular, to a bonding agent for 3D printing, and a preparation method and application thereof.

### Background Art

3D printing technology has attracted much attention since its birth more than 30 years ago. Some foreign companies that have made great achievements in 3D printing technology, including EXONE, Voxeljet and 3D Stratsys, have played a certain role in promoting 3D printing technology. With the introduction of the third industrial revolution, it has become increasingly popular in the eyes of the general public. The scientific name of 3D printing is additive manufacturing technology, whose principle is to decompose a three-dimensional model designed by a computer into several plane slices, then stack the "printing" material layer by layer according to the slice profile, and finally "stack" into a complete object. 3D printing is used in the field of casting to prepare mold cores and sand cores for inkjet printing technology. At present, some industrial-grade 3D printers have been used in casting production services, mainly for rapid prototyping of castings, duplication of molds, printing of mold shells and sand cores and so on.

At present, China's 3D casting printing technology is in its infancy. Some manufacturers have already used 3D printers to make molds. Binder resins are generally imported from abroad, resulting in much higher costs. Some resin manufacturers have also researched and developed 3D printing resins. For example, the publication number 104086734A discloses a preparation method of a binder for 3D printing, in which the resin preparation method is simple, modifiers and coupling agents are introduced, and the prepared resin meets the requirements for use in 3D printing equipment, but some properties of the printed resin sand, including mechanical strength, curing speed and sand dropping and cleaning, have not been improved.

In view of the high requirements of 3D printing equipment, it is necessary to prepare a furan resin with high mechanical strength, fast curing speed, easy sand dropping and cleaning and low viscosity at room temperature for 3D printing equipment.

In view of this, the present application is hereby filed.

### Summary of the Invention

The following is a summary of the topics detailed in this document. This summary is not intended to limit the scope of protection of the claims.

The first object of the present application is to provide a bonding agent for use in a 3D printing process, which has an extremely low viscosity at room temperature, and its viscosity is lower than 10 mPa.s at 20 °C, thus meeting the resin requirements of the print head in 3D printing equipment, such that the print head is not easily blocked, thereby facilitating the maintenance of the machine. The bonding agent has good performance for wrapping sand particles in the process of sand applying, and the printed sand mold has higher mechanical strength and faster curing speed, thus facilitating sand dropping and cleaning and improving the operational performance.

A second object of the present application is to provide a preparation method of the said bonding agent for 3D printing. The method is simple to operate, and the prepared bonding agent for 3D printing has excellent comprehensive performance and is stable.

A third object of the present application is to provide an application of the said bonding agent for 3D printing in making a casting sand mold by 3D inkjet printing equipment.

In order to achieve the above objects of the present application, the following technical solution is adopted:
A bonding agent for 3D printing, comprising the following components: 15-60 parts by weight of a furan resin, 42-68 parts by weight of furfuryl alcohol, 1-12 parts by weight of an accelerator, and 0.1-5 parts by weight of an additive, wherein the said furan resin is prepared by the reaction of phenolic resin and furfuryl alcohol.

The bonding agent for 3D printing provided by the present application has enhanced synergy between the components, and has extremely low viscosity at room temperature, and its viscosity is lower than 10 mPa.s at 20 °C, thus meeting the resin requirements of the print head in 3D printing equipment, such that the print head is not easily blocked, thereby facilitating the maintenance of the machine. The bonding agent has good performance for wrapping sand particles in the process of sand applying, and the printed sand mold has higher mechanical strength and faster curing speed, thus facilitating sand dropping and cleaning and improving the operational performance.

Preferably, in the preparation of the said furan resin, the mass ratio of the phenolic resin to furfuryl alcohol is 1: 1-2.5;

Preferably, the weight average molecular weight of the said furan resin is 200-350 g/mol;

Preferably, the weight average molecular weight of the said phenolic resin is 150-250 g/mol;

Preferably, the said accelerator includes one or more of resorcinol, catechol, bisphenol A and 2,5-dihydroxyfurfuryl alcohol;

Preferably, the said additive includes one or more of polysorbate, dioctyl sulfosuccinate, sodium dodecyl benzene sulfonate, sodium dodecyl sulfate, sodium laurate, and sodium stearate;

Preferably, the said phenolic resin is polymerized from xylenol and formaldehyde;

Preferably, the said xylenol is 3,5-dimethylphenol;

The application also provides a preparation method of a bonding agent for 3D printing, including the following steps:
(a) Phenolic resin and furfuryl alcohol react to form a furan resin;
(b) After the furan resin is diluted with furfuryl alcohol, add the accelerator and additive and then mix.

The preparation method of a bonding agent for 3D printing provided by the present application has simple preparation steps, and the prepared bonding agent for 3D printing has low viscosity, high tensile strength, fast curing speed and excellent comprehensive performance, and is stable.

Preferably, in step (a), the said phenolic resin is polymerized through the polycondensation reaction of xylenol and formaldehyde.

Preferably, the said xylenol is 3,5-dimethylphenol.

Preferably, the molar ratio of the said 3,5-dimethylphenol to the said formaldehyde is 1: 1-1.8.

Optionally, the said formaldehyde participates in the reaction in the form of aqueous solution of formaldehyde, and the mass percentage of formaldehyde in the said aqueous solution of formaldehyde is 35% -48%.

Optionally, a step of dehydration is further included after the polycondensation reaction.

Preferably, in step (a), the said polycondensation reaction is performed under the action of a catalyst.

Preferably, the catalyst is triethylamine.

Preferably, the added amount of the said catalyst is 0.5% to 2.0% by weight of the said 3,5-dimethylphenol.

Preferably, the said polycondensation reaction is performed at a pH value of 8.0-8.5.

Preferably, the said polycondensation reaction is as follows: first allow reaction at a temperature of 80 ± 2 °C for 0.5-1h, then heat to 85 ± 2 °C and allow reaction for 0.5-1h.

Preferably, step (a) is specifically as follows:
Mix phenolic resin and furfuryl alcohol to obtain a first mixture;
Adjust the first mixture to be acidic and allow reaction to form a furan resin.

Preferably, adjust the first mixture to be acidic using one or more of hydrochloric acid, formic acid and phosphoric acid.

Preferably, the pH value of the said acidic first mixture is 3.5-5.5.

Preferably, the said reaction is performed at 8-110 °C for 1-2h.

Preferably, in step (a), the mass ratio of the phenolic resin to furfuryl alcohol is 1: 1-2.5.

Preferably, in step (b), 15-60 parts by weight of a furan resin, 42-68 parts by weight of furfuryl alcohol, 1-12 parts by weight of an accelerator, and 0.1-5 parts by weight of an additive.

Preferably, the said accelerator includes one or more of resorcinol, catechol, bisphenol A and 2,5-dihydroxyfurfuryl alcohol;

Preferably, the said additive includes one or more of polysorbate, dioctyl sulfosuccinate, sodium dodecyl benzene sulfonate, sodium dodecyl sulfate, sodium laurate, and sodium stearate.

The present application also provides an application of the said bonding agent for 3D printing in making a casting sand mold by 3D inkjet printing equipment.

In comparison with the relevant art, the beneficial effects of the present application are as follows:
(1) The preparation method of a bonding agent for 3D printing provided in the present application, with which the prepared bonding agent for 3D printing has extremely low viscosity at room temperature, and its viscosity is lower than 10 mPa.s at 20 °C, thus meeting the resin requirements of the print head in 3D printing equipment, such that the print head is not easily blocked and is easy to clean, thereby facilitating the maintenance of the machine.
(2) The preparation method of a bonding agent for 3D printing provided in the present application, with which the prepared bonding agent for 3D printing has good performance for wrapping sand particles in the process of sand applying, and the printed sand mold has higher mechanical strength and faster curing speed.
(3) The preparation method of a bonding agent for 3D printing provided in the present application, with which the prepared bonding agent for 3D printing facilitates sand dropping and cleaning and improves the operational performance.

After reading and understanding the detailed description, other aspects can be understood.

### Detailed Description of the Preferred Embodiments

In one aspect, the present application relates to a bonding agent for 3D printing, including the following components: 15-60 parts by weight of a furan resin, 42-68 parts by weight of furfuryl alcohol, 1-12 parts by weight of an accelerator, and 0.1-5 parts by weight of an additive, wherein the said furan resin is prepared by the reaction of phenolic resin and furfuryl alcohol.

Wherein, the said furan resin has a weight average molecular weight of 200-350 g/mol. The furan resin in the present application is a mixture, whose weight average molecular weight ranges from 200 to 350 g/mol. For example, in some embodiments, the weight average molecular weight of the furan resin is 200-300 g/mol; in some embodiments, it is 200-250 g/mol; in some embodiments, it is 300-350 g/mol; in some embodiments, it is 280-300 g/mol and so on.

Specifically, the furoline resin is prepared by the reaction of phenolic resin and furfuryl alcohol, wherein the mass ratio of phenolic resin to furfuryl alcohol is 1: 1-2.5. In different embodiments, the mass ratio of phenolic resin to furfuryl alcohol can be 1: 1, 1: 1.5, 1: 2, 1: 2.5 and so on.

Optionally, the weight average molecular weight of the said phenolic resin is 150-250 g/mol. In the present application, the phenolic resin is a mixture with a weight average molecular weight ranging from 150 to 250 g/mol. For example, in some embodiments, the weight average molecular weight of the furan resin is 150-200 g/mol; in some embodiments, it is 180-250 g/mol; in some embodiments, it is 150-220 g/mol; in some embodiments, it is 180-250 g/mol and so on.

Optionally, the phenolic resin is polymerized from xylenol and formaldehyde. In this step, a polycondensation reaction between xylenol and formaldehyde is carried out to obtain phenolic resin.

Preferably, the said xylenol is 3,5-dimethylphenol. The phenolic resin obtained by the reaction of 3,5-dimethylphenol and formaldehyde is not easily entangled.

In order to make 3,5-dimethylphenol and formaldehyde react more fully, preferably, the molar ratio of the said 3,5-dimethylphenol to the said formaldehyde is 1: 1-1.8. For example, the molar ratio of 3,5-dimethylphenol to formaldehyde can be 1: 1, 1: 1.2, 1: 1.5, 1: 1.6, 1: 1.7, 1: 1.8 and so on.

Optionally, the said formaldehyde participates in the reaction in the form of aqueous solution of formaldehyde, and the mass percentage of formaldehyde in the aqueous solution of formaldehyde is 35% -48%. For example, the mass percentage of formaldehyde in the aqueous solution of formaldehyde can be 35%, 37%, 38%, 40%, 45%, 48% and so on.

As a large amount of water is contained in the aqueous solution of formaldehyde, and some water is also produced by the polycondensation reaction, in order to facilitate the reaction between the obtained product and furfuryl alcohol, optionally, step (a) further includes a step of dehydration after the polycondensation reaction.

Optionally, in step (a), the said polycondensation reaction is performed under the action of a catalyst.

Preferably, the said catalyst is triethylamine.

Preferably, the added amount of the said catalyst is 0.5% - 2.0% by weight of the said 3,5-dimethylphenol. For example, the added amount of the catalyst can be 0.5%, 0.8%, 1.0%, 1.2%, 1.5%, 1.8%, 2.0% and so on by weight of 3,5 -dimethylphenol.

After 3,5-dimethylphenol, formaldehyde and the catalyst are mixed, the solution becomes alkaline, that is, the polycondensation reaction in step (a) is performed under alkaline conditions.

Preferably, in step (a), the said polycondensation reaction is performed at the pH value range of 8.0-8.5. For example, the pH value for the polycondensation reaction in step (a) can be 8.0, 8.2, 8.3, 8.4, 8.5 and so on.

Preferably, in step (a), the said polycondensation reaction is as follows: first allow reaction at a temperature of 80 ± 2 °C for 0.5-1h, then heat to 85 ± 2 °C and allow reaction for 0.5-1h. Through gradual heating for reaction, 3,5-dimethylphenol can react with formaldehyde more fully. The phenolic resin obtained after the reaction is a mixture with a weight average molecular weight of 150-250.

Optionally, the said accelerator includes one or more of resorcinol, catechol, bisphenol A and 2,5-dihydroxyfurfuryl alcohol.

Optionally, the said additive includes one or more of polysorbate, dioctyl sulfosuccinate, sodium dodecyl benzene sulfonate, sodium dodecyl sulfate, sodium laurate, and sodium stearate.

According to a large number of tests, it is found that the bonding agent for 3D printing provided by the present application has enhanced synergy between the components, and has extremely low viscosity at room temperature, and its viscosity is lower than 10 mPa.s at 20 °C, thus meeting the resin requirements of the print head in 3D printing equipment, such that the print head is not easily blocked and is easy to clean, thereby facilitating the maintenance of the machine; the bonding agent has good performance for wrapping sand particles in the process of sand applying, and the printed sand mold has higher mechanical strength and faster curing speed, thus facilitating sand dropping and cleaning and improving the operational performance.

In a further aspect, the present application relates to a preparation method of the said bonding agent for 3D printing, comprising the following steps:
(a) Phenolic resin and furfuryl alcohol react to form a furan resin;
(b) After the furan resin is diluted with furfuryl alcohol, add the accelerator and additive and then mix.

Wherein, in step (a), the said phenolic resin is formed by the polycondensation reaction of xylenol and formaldehyde.

Preferably, the said xylenol is 3,5-dimethylphenol. The phenolic resin obtained by the reaction of 3,5-dimethylphenol and formaldehyde is not easily entangled.

In order to make 3,5-dimethylphenol and formaldehyde react more fully, preferably, the molar ratio of the said 3,5-dimethylphenol to the said formaldehyde is 1: 1-1.8. For example, the molar ratio of 3,5-dimethylphenol to formaldehyde can be 1: 1, 1: 1.2, 1: 1.5, 1: 1.6, 1: 1.7, 1: 1.8 and so on.

Optionally, the said formaldehyde participates in the reaction in the form of aqueous solution of formaldehyde, and the mass percentage of formaldehyde in the aqueous solution of formaldehyde is 35% -48%. For example, the mass percentage of formaldehyde in the aqueous solution of formaldehyde can be 35%, 37%, 38%, 40%, 45%, 48% and so on.

As a large amount of water is contained in the aqueous solution of formaldehyde, and some water is also produced by the polycondensation reaction, in order to facilitate the reaction between the obtained product and furfuryl alcohol, optionally, step (a) further includes a step of dehydration after the polycondensation reaction.

Optionally, in step (a), the said polycondensation reaction is performed under the action of a catalyst.

Preferably, the said catalyst is triethylamine. Adding a catalyst can better promote the polycondensation reaction between xylenol and formaldehyde.

Preferably, the added amount of the said catalyst is 0.5% - 2.0% by weight of the said 3,5-dimethylphenol. For example, the added amount of the catalyst can be 0.5%, 0.8%, 1.0%, 1.2%, 1.5%, 1.8%, 2.0% and so on by weight of 3,5 -dimethylphenol.

After 3,5-dimethylphenol, formaldehyde and the catalyst are mixed, the solution becomes alkaline, that is, the polycondensation reaction in step (a) is performed under alkaline conditions.

Preferably, the said polycondensation reaction is performed at the pH value range of 8.0-8.5. For example, the pH value for the polycondensation reaction in step (a) can be 8.0, 8.2, 8.3, 8.4, 8.5 and so on.

Preferably, the said polycondensation reaction is as follows: first allow reaction at a temperature of 80 ± 2 °C for 0.5-1h, then heat to 85 ± 2 °C and allow reaction for 0.5-1h. Through gradual heating for reaction, 3,5-dimethylphenol can react with formaldehyde more fully. The phenolic resin obtained after the reaction is a mixture with a weight average molecular weight of 150-250.

Optionally, step (a) is specifically as follows:
Mix phenolic resin and furfuryl alcohol to obtain a first mixture;
Adjust the said first mixture to be acidic and allow reaction to form a furan resin.

The phenolic resin and furfuryl alcohol react under acidic conditions. The reaction is a polycondensation reaction. Through effective and full reaction, the obtained furan resin has small viscosity, high strength and short curing time.

Optionally, the mass ratio of the phenolic resin to furfuryl alcohol is 1: 1-2.5, and the phenolic resin reacts with furfuryl alcohol at this ratio to obtain a furan resin. In different embodiments, the mass ratio of the phenolic resin to furfuryl alcohol can be be 1: 1.5, 1: 1.8, 1: 2, 1: 2.2, 1: 2.5 and so on.

Preferably, the said first mixture is adjusted to be acidic using one or more of hydrochloric acid, formic acid and phosphoric acid.

Preferably, the pH value of the said acidic first mixture is 3.5-5.5. For example, the pH value can be 3.5, 4.0, 4.5, 5.0, 5.3, 5.5 and so on.

In order to make the phenolic resin and furfuryl alcohol react more fully, preferably, the said reaction is performed at 85-110 °C for 1-2h. For example, the temperature of the polycondensation reaction can be 85 °C, 90 °C, 95 °C, 98 °C, 100 °C, 102 °C, 105 °C, 110 °C and so on, and the reaction time can be 60 min, 80 min, 90 min, 100 min, 120 min and so on.

Preferably, in step (b), 15-60 parts by weight of a furan resin, 42-68 parts by weight of furfuryl alcohol, 1-12 parts by weight of an accelerator, and 0.1-5 parts by weight of an additive.

The raw materials used in each step are coordinated for more full and effective reaction. The obtained bonding agent for 3D printing has excellent comprehensive performance and is stable and reliable.

By adding specific accelerators and additives, the raw materials are coordinated with each other to further improve the comprehensive performance of the prepared bonding agent for 3D printing.

Optionally, the said accelerator includes one or more of resorcinol, catechol, bisphenol A and 2,5-dihydroxyfurfuryl alcohol;

Preferably, the said additive includes one or more of polysorbate, dioctyl sulfosuccinate, sodium dodecyl benzene sulfonate, sodium dodecyl sulfate, sodium laurate, and sodium stearate.

The present application also provides a bonding agent for 3D printing prepared with the said preparation method. The furan resin has a viscosity lower than 10 mPa.s at 20 °C, thus meeting the resin requirements of the print head in 3D printing equipment; the furan resin has good performance for wrapping sand particles in the process of sand applying, and the printed sand mold has higher mechanical strength and faster curing speed; the furan resin facilitates sand dropping and cleaning and improves the operational performance. That is, the bonding agent for 3D printing prepared in the present application has excellent comprehensive performance, well solving the defects of the 3D printing binders in the relevant art.

The present application also provides an application of the said bonding agent for 3D printing in making a casting sand mold by 3D inkjet printing equipment.

The technical solution of the present application will be described in detail with reference to the embodiments, but those skilled in the art will understand that the following embodiments are only intended to illustrate the present application and not to limit the scope of the present application. If the specific conditions are not indicated in the embodiments, the conventional conditions or the conditions recommended by the manufacturer are used. If the manufacturers of the reagents or instruments used are not indicated, they are all commercially available conventional products.

### Embodiment 1

A bonding agent for 3D printing is prepared with the following steps:

### I. Raw materials

850 Kg furfuryl alcohol, 122 Kg 3,5-dimethylphenol, 121.5 Kg aqueous solution of formaldehyde (37wt%), 20Kg catechol, 2Kg polysorbate;

### II. Reaction steps

Add 122 Kg 3,5-dimethylphenol and 121.5 Kg aqueous solution of formaldehyde into the reaction kettle, adjust the pH to 8.3 with triethylamine solution, and start stirring. Slowly heat to 80 °C and allow reaction for 1h, then heat to 85 °C and allow reaction for 1h, and complete the reaction;
Cool to 60 °C, vacuum dehydrate 85. 25 Kg, add 170 Kg furfuryl alcohol, then adjust the pH to 5.2-5.5 with formic acid (50wt%) solution, and heat to 100-102 °C and allow reaction for 1h, and complete the reaction. Cool to 65 °C and vacuum dehydrate 10.25 Kg; add 680 Kg furfuryl alcohol, then add 20 Kg catechol and 2 Kg polysorbate in sequence, mix and stir for 10 minutes to fully dissolve the said materials, and discharge at 40 °C to obtain a bonding agent for 3D printing.

### Embodiment 2

A bonding agent for 3D printing is prepared with the following steps:

### I. Raw materials

815 Kg furfuryl alcohol, 122Kg 3,5-dimethylphenol, 121.5 Kg aqueous solution of formaldehyde (37wt%), 30 Kg resorcinol, 0.15 Kg dioctyl sulfosuccinate;

### II. Reaction steps

Add 122 Kg 3,5-dimethylphenol and 121.5 Kg aqueous solution of formaldehyde into the reaction kettle, adjust the pH to 8.4 with triethylamine solution, and start stirring. Slowly heat to 80 °C and allow reaction for 1h, then heat to 85 °C and allow reaction for 1h, and complete the reaction;
Cool to 60 °C, vacuum dehydrate 85. 25 Kg, add 165 Kg furfuryl alcohol, then adjust the pH to 5.2-5.5 with formic acid (50wt%) solution, and heat to 100-102 °C and allow reaction for 1h, and complete the reaction;
Vacuum dehydrate 10.25 Kg at 65 °C, add 650 Kg furfuryl alcohol, then add 30 Kg resorcinol and 1.5 Kg dioctyl sulfosuccinate in sequence, mix and stir for 10 minutes to fully dissolve the said materials, and discharge at 40 °C to obtain a bonding agent for 3D printing.

### Embodiment 3

### I. Raw materials

823 Kg furfuryl alcohol, 61 Kg 3,5-dimethylphenol, 55 Kg aqueous solution of formaldehyde (37%), 80 Kg bisphenol A, 0.5 Kg sodium laurate;

### II. Reaction steps

Add 61 Kg 3,5-dimethylphenol and 55 Kg aqueous solution of formaldehyde into the reaction kettle, adjust the pH to 8.5 with triethylamine solution, and start stirring. Slowly heat to 80 °C and allow reaction for 1h, then heat to 85 °C and allow reaction for 1h, and complete the reaction;
Cool to 60 °C, vacuum dehydrate 41.25 Kg, add 187 Kg furfuryl alcohol, then adjust the pH to 5.2-5.5 with formic acid (50wt%) solution, and heat to 100-102 °C and allow reaction for 1h, and complete the reaction;
Vacuum dehydrate 8.25 Kg at 65 °C, add 636 Kg furfuryl alcohol, then add 80 Kg bisphenol A and 0.5 Kg sodium laurate in sequence, mix and stir for 10 minutes to fully dissolve the said materials, and discharge at 40 °C to obtain a bonding agent for 3D printing.

### Embodiment 4

### I. Raw materials

885 Kg furfuryl alcohol, 73.2 Kg 3,5-dimethylphenol, 58.3 Kg aqueous solution of formaldehyde (37%), 25 Kg 2,5-dihydroxyfurfuryl alcohol, 0.2 Kg polysorbate;

### II. Reaction steps

Add 73.2 Kg 3,5-dimethylphenol and 58.3 Kg aqueous solution of formaldehyde into the reaction kettle, adjust the pH to 8.4 with triethylamine solution, and start stirring. Slowly heat to 80 °C and allow reaction for 1h, then heat to 85 °C and allow reaction for 1h, and complete the reaction;
Cool to 60 °C, vacuum dehydrate 36.5 Kg, add 185 Kg furfuryl alcohol, then adjust the pH to 5.2-5.5 with formic acid (50wt%) solution, and heat to 100-102 °C and allow reaction for 1h, and complete the reaction;
Vacuum dehydrate 8.25 Kg at 65 °C, add 700 Kg furfuryl alcohol, then add 25 Kg 2,5-dihydroxyfurfuryl alcohol and 2 Kg polysorbate in sequence, mix and stir for 10 minutes to fully dissolve the said materials, and discharge at 40 °C to obtain a bonding agent for 3D printing.

### Embodiment 5

### I. Raw materials

450 Kg furfuryl alcohol, 30 Kg 3,5-dimethylphenol, 35 Kg aqueous solution of formaldehyde (37%), 20 Kg resorcinol, 10 Kg bisphenol A, 0.3 Kg polysorbate

### II. Reaction steps

Add 30 Kg 3,5-dimethylphenol and 35 Kg aqueous solution of formaldehyde into the reaction kettle, adjust the pH to 8.3 with triethylamine solution, and start stirring. Slowly heat to 80 °C and allow reaction for 1h, then heat to 85 °C and allow reaction for 1h, and complete the reaction;
Cool to 60 °C, vacuum dehydrate 20.25 Kg, add 100 Kg furfuryl alcohol, then adjust the pH to 5.2-5.5 with formic acid (50wt%) solution, and heat to 100-102 °C and allow reaction for 1h, and complete the reaction;
Vacuum dehydrate 11.25 Kg at 65 °C, add 350 Kg furfuryl alcohol, then add 20 Kg resorcinol, 10 Kg bisphenol A and 3 Kg polysorbate in sequence, mix and stir for 10 minutes to fully dissolve the said materials, and discharge at 40 °C to obtain a bonding agent for 3D printing.

### Embodiment 6

A bonding agent for 3D printing is prepared with the following reaction steps:
Add 80 Kg 3,5-dimethylphenol and 56 Kg aqueous solution of formaldehyde (35%) into the reaction kettle, adjust the pH to 8.0 with triethylamine solution, and start stirring. Slowly heat to 80 °C and allow reaction for 0.5h, then heat to 85 °C and allow reaction for 0.5h, and complete the reaction;
Cool to 60 °C, perform vacuum dehydration, add furfuryl alcohol 2 times the mass of phenolic resin, then adjust the pH to 5.0 with hydrochloric acid solution, and heat to 100 °C and allow reaction for 1h, and complete the reaction; perform vacuum dehydration at 65 °C to obtain furan resin;
Take 180 Kg furan resin, add 204 Kg furfuryl alcohol, then add 10 Kg catechol, 10 Kg bisphenol A, 16 Kg 2,5-dihydroxyfurfuryl alcohol and 15 Kg sodium dodecyl benzene sulfonate in sequence, mix and stir for 10 minutes to fully dissolve the said materials, and discharge at 40 °C to obtain a bonding agent for 3D printing.

### Embodiment 7

A bonding agent for 3D printing is prepared with the following reaction steps:
Add 50 Kg 3,5-dimethylphenol and 53 Kg aqueous solution of formaldehyde (40%) into the reaction kettle, adjust the pH to 8.2 with triethylamine solution, and start stirring. Slowly heat to 80 °C and allow reaction for 1h, then heat to 85 °C and allow reaction for 0.5h, and complete the reaction;
Cool to 60 °C, then perform vacuum dehydration to obtain phenolic resin, add furfuryl alcohol the same mass as phenolic resin, then adjust the pH to 5.1 with phosphoric acid solution, and heat to 95 °C and allow reaction for 2h, and complete the reaction; perform vacuum dehydration at 65 °C to obtain furan resin;
Take 150 Kg furan resin, add 420 Kg furfuryl alcohol, then add 5 Kg catechol, 3 Kg bisphenol A, 2 Kg 2,5-dihydroxyfurfuryl alcohol and 1 Kg sodium dodecyl sulfate in sequence, mix and stir for 10 minutes to fully dissolve the said materials, and discharge at 40 °C to obtain a bonding agent for 3D printing.

### Embodiment 8

A bonding agent for 3D printing is prepared with the following reaction steps:
Add 30 Kg 3,5-dimethylphenol and 25 Kg aqueous solution of formaldehyde (48%) into the reaction kettle, adjust the pH to 8.3 with triethylamine solution, and start stirring. Slowly heat to 80 °C and allow reaction for 1h, then heat to 83 °C and allow reaction for 1h, and complete the reaction;
Cool to 60 °C, then perform vacuum dehydration to obtain phenolic resin, add furfuryl alcohol 1.5 times the mass of phenolic resin, then adjust the pH to 5.3 with formic acid (50wt%) solution, and heat to 100 °C and allow reaction for 1h, and complete the reaction; perform vacuum dehydration at 65 °C to obtain furan resin;
Take 60 Kg furan resin, add 150 Kg furfuryl alcohol, then add 7 Kg catechol, 8 Kg bisphenol A and 3 Kg sodium stearate in sequence, mix and stir for 10 minutes to fully dissolve the said materials, and discharge at 40 °C to obtain a bonding agent for 3D printing.

### Comparative Example 1

The difference from Embodiment 1 is that all furfuryl alcohol is added when adding furfuryl alcohol for the first time.

### Comparative Example 2

The difference from Embodiment 5 is that all furfuryl alcohol is added when adding furfuryl alcohol for the first time.

### Comparative Example 3

The composition of the raw materials is the same as that in Embodiment 1, but the reaction steps are different, specifically including:
Add 3,5-dimethylphenol, aqueous solution of formaldehyde and furfuryl alcohol into the reaction kettle, start stirring, then allow reaction for 2h at 85 °C, and perform dehydration;
Add catechol and polysorbate in sequence, mix and stir for 10 minutes to fully dissolve the said materials, and discharge at 40 °C to obtain a bonding agent for 3D printing.

The physical and chemical indexes of the bonding agents for 3D printing prepared in Embodiments 1-8 were tested, and the analysis method of free formaldehyde and strength was performed in accordance with JB/T7526-1994 *Self-set Furan Resin for Foundry.* The specific results are shown in Table 1.

**Table 1 Physical and Chemical Indexes of the Bonding Agents for 3D printing**

| Group | Viscosity (20°C mPa.s) | Formaldehyde Content (%) | Tensile Strength (MPa) | Curing Speed/Mold Lifting Time (Minutes) |
|---|---|---|---|---|
| Embodiment 1 | 8.55 | 0.018 | 1.52 | 15 |
| Embodiment 1 | 8. 79 | 0.019 | 1. 53 | 17 |
| Embodiment 1 | 9. 12 | 0. 025 | 1. 59 | 16 |
| Embodiment 1 | 9. 21 | 0.011 | 1.82 | 16 |
| Embodiment 1 | 8.86 | 0.024 | 1. 58 | 18 |
| Embodiment 1 | 9. 54 | 0.021 | 1.49 | 19 |
| Embodiment 1 | 8.68 | 0.020 | 1.51 | 16 |
| Embodiment 1 | 8.91 | 0.026 | 1.65 | 15 |
| Comparative example 1 | 25.78 | 0.18 | 1.21 | 26 |
| Comparative example 1 | 25.47 | 0. 15 | 1.20 | 27 |
| Comparative example 1 | 23.4 | 0.23 | 1.23 | 25 |

To sum up, the bonding agent for 3D printing prepared with the preparation method provided in the present application has a viscosity lower than 10 mPa.s at 20 °C, thus meeting the resin requirements of the print head in 3D printing equipment; the obtained furan resin has good performance for wrapping sand particles in the process of sand applying, and the printed sand mold has higher mechanical strength and faster curing speed; the furan resin facilitates sand dropping and cleaning and improves the operational performance. That is, the bonding agent for 3D printing prepared in the present application has excellent comprehensive performance, well solving the defects of the 3D printing binders in the relevant art.

Although the present application has been described in detail with reference to the specific embodiments, it should be noted that many other changes and modifications can be made without departing from the spirit and scope of the present application. Therefore, it is intended to cover in the appended claims all such changes and modifications that are within the scope of this application.

## Claims

1. A bonding agent for 3D printing, comprising the following components: 15-60 parts by weight of a furan resin, 42-68 parts by weight of furfuryl alcohol, 1-12 parts by weight of an accelerator, and 0.1-5 parts by weight of an additive, wherein the said furan resin is prepared by the reaction of phenolic resin and furfuryl alcohol.

2. The bonding agent for 3D printing according to Claim 1, wherein, in the preparation of the said furan resin, the mass ratio of the phenolic resin to furfuryl alcohol is 1: 1-2.5;

3. The bonding agent for 3D printing according to Claim 1 or 2, wherein
the weight average molecular weight of the said furan resin is 200-350 g/mol;
the weight average molecular weight of the said phenolic resin is 150-250 g/mol;
the said accelerator includes one or more of resorcinol, catechol, bisphenol A and 2,5-dihydroxyfurfuryl alcohol;
the said additive includes one or more of polysorbate, dioctyl sulfosuccinate, sodium dodecyl benzene sulfonate, sodium dodecyl sulfate, sodium laurate, and sodium stearate;

4. The bonding agent for 3D printing according to any of Claims 1-3, wherein the said phenolic resin is polymerized from xylenol and formaldehyde;
Preferably, the said xylenol is 3,5-dimethylphenol.

5. A preparation method of a bonding agent for 3D printing, including the following steps:
(a) Phenolic resin and furfuryl alcohol react to form a furan resin;
(b) After the furan resin is diluted with furfuryl alcohol, add the accelerator and additive and then mix.

6. The preparation method of a bonding agent for 3D printing according to Claim 5, wherein, in step (a), the said phenolic resin is polymerized through the polycondensation reaction of xylenol and formaldehyde;
Preferably, the said xylenol is 3,5-dimethylphenol;
Preferably, the molar ratio of the said 3,5-dimethylphenol to the said formaldehyde is 1: 1-1.8.
Optionally, the said formaldehyde participates in the reaction in the form of aqueous solution of formaldehyde, and the mass percentage of formaldehyde in the said aqueous solution of formaldehyde is 35% -48%;
Optionally, a step of dehydration is further included after the polycondensation reaction.

7. The preparation method of a bonding agent for 3D printing according to Claim 6, wherein, in step (a), the said polycondensation reaction is performed under the action of a catalyst;
Preferably, the said catalyst is triethylamine;
Preferably, the added amount of the said catalyst is 0.5% to 2.0% by weight of the said 3,5-dimethylphenol; Preferably, the said polycondensation reaction is performed at a pH value of 8.0-8.5;
Preferably, the said polycondensation reaction is as follows: first allow reaction at a temperature of 80 ± 2 °C for 0.5-1h, then heat to 85 ± 2 °C and allow reaction for 0.5-1h.

8. The preparation method of a bonding agent for 3D printing according to Claim 5, wherein step (a) is specifically as follows:
Mix phenolic resin and furfuryl alcohol to obtain a first mixture;
Adjust the said first mixture to be acidic and allow reaction to form a furan resin;
Preferably, adjust the said first mixture to be acidic using one or more of hydrochloric acid, formic acid and phosphoric acid.
Preferably, the pH value of the said acidic first mixture is 3.5-5.5;
Preferably, the said reaction is performed at 8-110 °C for 1-2h.

9. The preparation method of a bonding agent for 3D printing according to any of Claims 5-8, wherein, in step (a), the mass ratio of the phenolic resin to furfuryl alcohol is 1: 1-2.5;
Preferably, in step (b), 15-60 parts by weight of a furan resin, 42-68 parts by weight of furfuryl alcohol, 1-12 parts by weight of an accelerator, and 0.1-5 parts by weight of an additive.

10. The preparation method of a bonding agent for 3D printing according to any of Claims 5-8, wherein the said accelerator includes one or more of resorcinol, catechol, bisphenol A and 2,5-dihydroxyfurfuryl alcohol;
Preferably, the said additive includes one or more of polysorbate, dioctyl sulfosuccinate, sodium dodecyl benzene sulfonate, sodium dodecyl sulfate, sodium laurate, and sodium stearate.

11. The application of the bonding agent for 3D printing according to any of Claims 1-4 or the bonding agent for 3D printing prepared with the preparation method according to any of Claims 5-10 in making a casting sand mold by 3D inkjet printing equipment.
